# EUROPEAN PATENT SPECIFICATION

(11) **EP 4 469 680 B1**
(45) Date of publication and mention of the grant of the patent: **17.12.2025**
(21) Application number: 23703692.6
(22) Date of filing: 25.01.2023
(51) Int. Cl.: F03D 13/10, F03D 13/25, B66C 1/10, B66C 23/18

(54) **WIND TURBINE INSTALLATION SYSTEM AND METHOD FOR INSTALLATION A WIND TURBINE**
WINDENERGIEANLAGE UND VERFAHREN ZUM INSTALLIEREN EINER WINDENERGIEANLAGE
SYSTÈME D'INSTALLATION D'ÉOLIENNE ET PROCÉDÉ D'INSTALLATION D'UNE ÉOLIENNE

(30) Priority: 25.01.2022 DK PA202270031
(43) Date of publication of application: 04.12.2024
(73) Proprietor: ENABL A/S, 8722 Hedensted (DK)
(72) Inventor: VAGTHOLM, Henrik, 5591 Gelsted (DK); SVENNINGGAARD, Jon, 8700 Horsens (DK)
(74) Representative: Patrade A/S
(86) International application number: PCT/DK2023/050013
(87) International publication number: WO 2023/143683

(56) References cited:
- WO-A1-2018/228809
- WO-A1-2018/228810
- WO-A1-2019/074364
- US-A1- 2012 304 911

## Description

### Field of the Invention

The present invention relates to a wind turbine installation system for installation of an onshore wind turbine or an offshore wind turbine comprising a tower and a nacelle arranged on a fundament, wherein said system comprises
a crane arrangement and at least one winch,
a control arrangement which comprises a winch control system and a monitoring device, which is arranged for monitoring the relative movements/oscillation of the tower relative to a ground when installing an offshore wind turbine or relative to a vessel when installing an offshore wind turbine and which monitoring device is arranged at the tower or nacelle.

Furthermore, the invention relates to a method for installation an onshore wind turbine or an offshore wind turbine comprising a tower and a nacelle arranged on a fundament, which method comprises the steps of
- providing a crane for lifting wind turbine components and positioning said crane at a site of installation of the wind turbine,
- providing a winch arrangement, comprising at least one winch,
- providing a control arrangement which comprises a winch control system and a monitoring device, which is arranged for monitoring the relative movements/oscillation of the tower and which monitoring device is arranged at the tower or nacelle,
- positioning a monitoring device, which is arranged for monitoring the relative movements/oscillation of the tower relative to a ground when installing an offshore wind turbine or relative to a vessel when installing an offshore wind turbine,
- connecting the monitoring device with the control system.

Furthermore, the invention relates to a method for installation of an offshore wind turbine comprising a tower and a nacelle, which method comprises the steps of providing an installation vessel provided with a crane for lifting wind turbine components and positioning said installation vessel at a site of installation of the offshore wind turbine.

In the present application a fundament may be a monopile in an offshore wind turbine.

### Background of the Invention

The invention is specifically developed in connection with a marine vessel for installation wind turbine components to offshore windfarms. The wind turbine components (including, but not limited to nacelles, blades and towers) are placed on a marine vessel which is transporting the components from a logistics harbor/quayside to the offshore site for installation. At the offshore site, the components are lifted from the vessel and onto pre-installed foundations using a large marine crane.

However, the invention according to the invention may also be used for other components, for example component for offshore oil exploitation platforms or other offshore constructions. Especially such constructions which are placed on monopiles which are influenced by wave movements and ocean currents.

In the following the invention will be explained in connection with fastening the straps to a wind turbine tower, however instead of fastening the straps to the tower it is possible that the straps are fastened to a monopile on which a tower section is mounted.

The operational steps for the installation of the wind turbine tower components involves a number of steps.

After placing the components on the vessel deck at a quayside, the components are secured to the vessel normally using bolted or welded sea fastening connections.

Later when the components are to be removed from the vessel at the offshore site, the sea fastening connections shall be disconnected.

Components may be lifted from a floating vessel via a crane mounted on same or another vessel. The vessel may be a feeder barge.

The need for green energy is accelerating, resulting in increased demand for the installation of more wind power energy. The leading suppliers of wind turbine generators WTG's are continuously announcing the development and implementation of even bigger WTG's. As a result, the offshore wind industry will continue to face more challenges relating to the installation of WTG components in the future.

The design of wind turbine towers and monopile foundations are getting bigger, however they are being designed in a way that they are unstable - causing oscillating movement under the influence of current waves and/or wind. As a result, the burden (nacelle and blades) cannot be installed without causing risk and danger to the crew and damages to the installation tools and WTG components.

These oscillating movements can measure more than 400mm in amplitude, and therefore often cause delays in the installation process. **In** a specific case where the installation of a WTG was expected to take 3 days (including transport at sea), the oscillating movements of the tower caused delays of up to 12 days per WTG. These delays can have major financial consequences. The direct costs in relation to the installation vessel are between 1,5 - 4,0 MDKK/day. Therefore, these delays significantly impact the cost of energy. Typically, during installation an amplitude of 50 mm is acceptable.

Another significant short-term challenge in the wind industry is posed by the introduction of floating installation vessels. The vessels are designed to operate on deeper sea levels, where the Jack Up vessels cannot operate. Typically, the maximum sea depth for Jack Up Vessel is 60meters. The Jack Up vessels have the advantage that they stand on the sea floor, thereby creating a relatively stable foundation for the installation. This means that the crane on the installation vessel is stable during installation and therefore able to safely install the WTG components in combination with a tag line and guide wire system.

The floating vessels will be more sensitive to wind and wave conditions with the consequence of having a more confined operation window for installation. They compensate for this by adding an active heave compensation system to the crane, which in turn eliminates the vertical movement of the burden.

However, the horizontal translational degrees of freedom are still free, which makes the burden move in these directions.

Today there exist tagline master solutions, which allow for a safe and controlled guiding process of rotors, nacelles, and single blades in any site condition, both onshore & off- shore. They provide for a handling of heavy loads in cooperation with the cranes. The challenge with today's tagline solution is that it is mounted on the crane and will therefore follow the crane in all its movement. For example, if the crane is placed on a floating vessel, the burden will follow the crane if it is impacted by waves or wind. While the floating vessels have systems to adapt to these conditions, their capability is limited. Therefore, the operation window of this type of vessel is limited, meaning the installation cost per installed offshore WTG will increase.

If today's system - a tagline - guideline system is used in combination with a floating crane, the lifted burden will follow the translational movements of the crane, which means the load of the crane will follow the crane synchronous and not be in rest relatively to the target in form of a wind turbine, a tower etc.

However also the target will have translational movements.

Translational movements of the tower and the fundament are typically not a one-directional oscillation. There will also occur a rotational movement with an elliptical pattern. The rotational movements may be limited but the oscillations will not be one-directional.

To optimize and increase the installation window for the floating installation vessel and thus reduce the cost of energy - there is a need to provide a solution to the problem with oscillation due to wind and wave conditions.

To optimize and increase the installation window for installation of onshore wind turbines there is also a need to provide a solution to the problem with oscillation due to wind. This is especially the case when a nacelle is mounted on the tower and the hub and blades shall be installed.

There are known damper systems for reducing oscillations in towers.

Prior art comprises a tower damper system, which is a passive damper system (tuned mass damper) which is primarily suitable for onshore WTG's but is also used with limited success on offshore towers. This solution is a provisional tool that is removed from the WTG after installation. It has limited effect.

This passive damper system has drawbacks:
Limited effect. The length of the tower damper and mass of the pendulum limits the dampening effect. Can be very complicated to remove as the damper can be located on the backside of the tower compared to the installation vessel.

Prior art also comprises a tower damper system, which is an active damper system. This system works by means of moving a mass in counter phase to the oscillations of the tower and nacelle combination. It measures the actual movements in the nacelle and counters the movements by accelerating a large mass in the horizontal plane.

This active damper has drawbacks:
Very costly. Complex design and it takes a relatively long time to install and start up the tool. Will only fit one nacelle geometry. Mass must be increased dramatically with increased dead load of the nacelle and tower. The solution has no effect as long the nacelle has not been installed on top of the tower, since the tool is a part of the Nacelle.

US 2021/0284506A1 discloses a system and a method being described by way of introduction and which are defined in the preamble of independent claims 1 and 9

In this system there is a need for a tagline system for stabilizing the load during installation. Furthermore, a sensor arrangement is provided to detect a motion of the wind turbine assembly relative to the load.

This system also requires an actuator for adjusting the position of the load relative to the target in form of a wind turbine assembly and a control system which controls the actuator in order to reduce the relative movement. In other words, this system accepts the oscillations of the tower and nacelle and does not aim at reducing the oscillations of the tower and nacelle. Instead, the system uses the tagline system to induce oscillations in the load corresponding to the oscillations of the tower and nacelle.

This is a costly and complex design and is difficult to establish the synchronous oscillations which reduces the detected relative motion.

Therefore, there is a need for a wind turbine installation system for installation of an offshore or an onshore wind turbine and which in an efficient and cost-effective way is able to reduce to the oscillations in the tower and thereby stabilize the tower.

The installation system may be advantageous if it is based on prior art technology.

### Object of the Invention

The object of the present invention is to provide a wind turbine installation system and method for installation an offshore or an onshore wind turbine which makes it possible to reduce oscillations in a tower or a fundament (for an offshore wind turbine) in order to increase the operation window for the installation.

It is a further object of the invention that the installation system and method may be suitable for cooperating with prior art systems for installation in a precise and secure way without posing a risk to personnel when installing the wind turbine component.

### Description of the Invention

The object is obtained with a wind turbine installation system according to the preamble of claim 1 and which is peculiar in that said winch has a winch motor and a bi-directional rotational spool with a strap, wherein the winch preferably is placed in a distance from the tower, wherein said strap is provided with attachment means, for a controlled pull on the tower or the nacelle, that the control system comprises tension sensor means for determining strap tension and spool rotation sensor means for determining spool rotation, and wherein the control system is controllably connected to said winch motor for controlling spool rotation in order to induce counter movements to the oscillations in the tower and thereby stabilize the tower.

The wind turbine installation system according to the invention for installation of an offshore wind turbine comprising a tower arranged on a fundament, is peculiar in that said winch preferably is placed on an installation vessel, wherein said strap is provided with attachment means, for applying a controlled pull on the tower, the nacelle or the fundament, the monitoring device is arranged for monitoring the movements/oscillation of the tower or fundament relative to the vessel and which monitoring device is arranged at the tower, the nacelle or the fundament, and wherein the control system is controllably connected to said winch motor for controlling spool rotation in order to induce counter movements to the oscillations in the tower or fundament and thereby stabilize the tower or fundament.

The wind turbine installation system according to the invention for installation of an onshore wind turbine comprising a tower arranged on a fundament, is peculiar in that said winch preferably is placed on the ground, wherein said strap is provided with attachment means, preferably for attachment to the tower or the nacelle of the wind turbine.

It is preferred that the attachment means is attached to the tower, the nacelle or the fundament of the wind turbine, however it is also possible that the attachment means is fixed to a vessel or the ground and that the winch is arranged on the vessel or on the ground as explained later.

Said system comprises at least one winch and a winch control system, said winch has a winch motor and a bi-directional rotational spool with a strap, wherein the winch preferably is placed on an installation vessel, wherein said strap is provided with attachment means preferably for attachment to a tower, a nacelle or a fundament of the wind turbine and for applying a controlled pull on the tower, nacelle or fundament, that the control system comprises a monitoring device, which is arranged for monitoring the movements/oscillation of the tower relative to the ground when installing an onshore wind turbine or relative to the vessel when installing an offshore wind turbine and which monitoring device is arranged at the tower, nacelle or fundament, that the control system comprises tension sensor means for determining strap tension and spool rotation sensor means for determining spool rotation, and wherein the control system is controllably connected to said winch motor for controlling spool rotation in order to induce counter movements to the oscillations in the tower and thereby stabilize the tower.

A further embodiment of the system for installation of an offshore wind turbine is peculiar in that the wind turbine installation system comprises two winches, each of said winches having a winch motor and a bi-directional rotational spool with a strap, wherein the winches are placed on the installation vessel, wherein each strap is provided with attachment means for attachment to the tower, the nacelle or the fundament of the wind turbine and for applying a controlled pull on the tower, the nacelle or the fundament.

A further embodiment of the system according for installation of an onshore wind turbine is peculiar in that the wind turbine installation system comprises two winches, each of said winches having a winch motor and a bi-directional rotational spool with a strap.

Both embodiment with two winches is furthermore peculiar that the straps are arranged with a mutual angle, which angle is between 40° and 120°, preferably between 45° and 110° and more preferably between 75° and 95°, and most preferably 90°.

The method according to the invention is peculiar in that the method comprises the steps of
- providing said winch with a winch motor and a bi-directional rotational spool with a strap, wherein said strap is arranged for applying a controlled pull on the tower or the nacelle, and
- providing the winch control system which comprises tension sensor means for determining strap tension and spool rotation sensor means for determining spool rotation, and wherein the control system is controllably connected to said winch motor for controlling spool rotation,
- providing attachment means for attachment to the strap,
- placing the winch for establishing a distance between the winch and the attachment means, preferably be placing the winch in a distance from the tower,
- positioning a monitoring device, which is arranged for monitoring the relative movements/oscillation of the tower,
- connecting the monitoring device with the control system,
- tying the strap between said winch and said attachment means,
- activating the winch motor until preset strap tension is reached in the strap,
- monitoring the relative movements/oscillation of the tower relative to a ground when installing an offshore wind turbine or relative to a vessel when installing an offshore wind turbine,
- during movement/oscillations of the tower, the control system activates the winch motor for rotation, if necessary, the spool with a rotation speed to counteract these movements hereby damping the movements of the tower until a pre-set limit for the oscillation is reached,
- conducting the installation procedure for the wind turbine component to be installed,
- relieving the tension in strap by rotating the spool, and
- disconnecting the attachment means.

The method for installation of an offshore wind turbine is peculiar in that the method comprises the steps of
- providing an installation vessel provided with said crane for lifting wind turbine components
- providing the winch on the tower or fundament or preferably on the installation vessel,
- providing the attachment means for said strap on the vessel or preferably on the tower, a nacelle or the fundament for the offshore wind turbine, wherein said strap is arranged for applying a controlled pull on the tower, the nacelle or the fundament,
- positioning the monitoring device at the tower, the nacelle or the fundament,
- positioning said installation vessel at a site of installation of the offshore wind turbine,
- tying the strap between said winch and said attachment means,
- monitoring the relative movements/oscillation of the tower or fundament relative to the vessel,
- during movement/oscillations of the tower or fundament, the control system activates the winch motor for rotation, if necessary, the spool with a rotation speed to counteract these movements hereby damping the movements of the tower or fundament until a preset limit for the oscillation is reached.

The method for installation of an onshore wind turbine is peculiar in that the method comprises the steps of
- providing the winch on the tower or preferably on the ground in a distance from the tower,
- providing the attachment means for said strap on the ground in a distance from the tower or preferably on the tower or the nacelle,
- applying a controlled pull on the tower or the nacelle.

A further embodiment of the method for installation of an offshore wind turbine is peculiar in that the method comprises the steps of
- providing a winch arrangement, comprising two winches, each of said winches having a winch motor and a bi-directional rotational spool with a strap, wherein the winches are placed on the installation vessel, wherein each strap is provided with attachment means for attachment to the tower, the nacelle or the fundament for the offshore wind turbine, wherein the straps are arranged for applying a controlled pull on the tower, the nacelle or the fundament, and wherein the control system is controllably connected to each winch motor for controlling spool rotations,
- activating the winch motors until preset strap tensions is reached in the two straps, and
- during movement/oscillations of the tower, the control system activates the winch motors for rotation, if necessary, the spools with a rotation speed to counteract these movements hereby damping the movements of the tower until a pre-set limit for the oscillation is reached.

A further embodiment of the method for installation of an onshore wind turbine is peculiar in that the method comprises the steps of
- providing a winch arrangement, comprising two winches, each of said winches having a winch motor and a bi-directional rotational spool with a strap, wherein the winches are placed on the ground, wherein each strap is provided with attachment means for attachment to the tower or the nacelle, wherein the straps are arranged for applying a controlled pull on the tower or the nacelle, and wherein the control system is controllably connected to each winch motor for controlling spool rotations,
- activating the winch motors until preset strap tensions is reached in the two straps, and
- during movement/oscillations of the tower, the control system activates the winch motors for rotation, if necessary, the spools with a rotation speed to counteract these movements hereby damping the movements of the tower until a pre-set limit for the oscillation is reached.

In the embodiments for the method comprising the step of providing two winches is furthermore peculiar in the step of
- ensuring that the mutual angle between the straps is between 40° and 120°, preferably between 45° and 110° and more preferably between 75° and 95°, and most preferably 90°.

As used in the present application the term "relative movements/oscillation of the tower" will mean the movement/oscillation of the tower relative to a ground in connection with an onshore wind turbine and the movement/oscillation of the tower relative to the vessel in connection with an offshore wind turbine.

As used in the present application the term "a distance" will mean a length which may be within a large interval ranging from 10 to 300 m. or even larger. This length will depend on different parameters, for example the of the height of the tower, the surroundings where the wind turbine is placed and equipment used for the installation.

The installation system and the method reduce the oscillation amplitude of the wind turbine tower sufficient for the installation work to be carried out at times when this was not previously possible.

The invention further minimizes the risk and danger to both crew and equipment.

It is preferred to arrange the winch, or the winches, on the installation vessel and the attachment means arranged on the tower, the nacelle or the fundament.

However, for an offshore wind turbine, it is alternatively possible to have the winch, or the winches, arranged on the tower, the nacelle or the fundament and to have the attachment means arranged on the vessel.

And for an onshore wind turbine it is alternatively possible to have the winch, or the winches, arranged on the tower or the nacelle and to have the attachment means arranged on the ground. The attachment means may for example be arranged at a vehicle or a fundament mounted in the ground. When installing more wind turbines in a wind park it may be possible to have a few fundaments and to use redirection roller as explained below for installing more wind turbines.

These two alternatives may especially be used in embodiments where only one winch is used. In such situation the winch may be maintained in the tower or the nacelle and used as a service crane in the wind turbine.

In short, the control involves that when the tower moves away from the winch, the winch motor will raise the torque, thereby attenuating the amplitude of current oscillation. The amplitude of the tower oscillation can only be actively attenuated when the position of the tower moves away from the winch. When the tower moves towards the winch, the winch motor will pull with as little torque as possible, which ensures that the strap is rolled up and kept tightened so that it can be used for attenuation when the tower moves away from the winch again. When the strap is kept tightened the attenuation effect may be induced from the beginning of the movement away from the winch.

It shall be understood that the oscillation of the tower will normally comprise a linear oscillation which may be combined with a rotational movement following an oval curve and not only a one-directional oscillation.

Even though the oscillation comprises a combination of the linear oscillation and an oval rotational movement it will be sufficient to attenuate the oscillation with a one-directional pull only by using one winch.

This is especially the case if the direction between the winch and the tower is parallel with the main axis for the rotational movement. However even if the direction between the winch and the tower is transversal to the main axis for the rotational movement an attenuation is obtained.

Moreover, the invention also foresee that more than two winches are used for obtained a larger degree of attenuation. This is possible in situation where the available space for arranging the winches allows the use of more winches.

However, it is advantageous to use two winches arranged with mutual angle in order to attenuate the oscillations which comprises the rotational movement. By arranging the mutual angle between the straps ensures that an attenuation is provided even if a substantially linear oscillation occurs which is transverse to a direction between the tower and the vessel.

As the vessel is arranged at one side of the tower the winches cannot be arranged on each side of the tower. Therefore, the tower oscillation can only be actively attenuated when the position of the tower moves away from the winch. But it shall also be understood that the oscillations of the tower can result in situation where the oscillating movement will move the tower away from the first winch and towards the second winch. The control system will also take such situation into account. The winch motors are individually dynamically controlled, and they may apply opposite directed torque to the tower as well as they are able to apply torques with different magnitude.

Moreover, it is to be noted that in an embodiment it is possible to arrange the winches on different vessels, for example an installation vessel in combination with a supply barge, if this is necessary to have a sufficient large mutual angel between the straps. In such situation it might also be possible to arrange a vessel on opposite sides of a tower whereby it is possible to attenuate the oscillations in two oppositely directed directions.

According to the present invention the straps may be fastened to a wind turbine tower, when the tower is erected. It is preferred to attach the straps close to the top of the tower.

However, a monopile fundament for the offshore wind turbine may be arranged with a length where is also advantageous to use the attenuation principle. The monopile may be affected by ocean currents and oscillate. Therefore, instead of fastening the straps to the tower it is possible that the straps are fastened to a monopile on which a tower section is mounted. In such situation there may often be provided a transition piece and the strap or straps may be attached to such transition piece.

The attachment of the strap to the tower may be affected by providing an interface on the tower. Alternatively, the attachment can be a sling which is led around the tower at the top. The sling or interface is connected to the strap wound up on the winch. Alternatively, a line can be used as a drawstring to connect the straps to the tower.

The winch motors may be hydraulically or electrically driven.

In an embodiment the winch motors are electrically equipped with encoders that accurately measure the position of the winch motors and thus speed. The torque of the winch motors is programmed to be dependent on the encoder. Frequency converters (VFD) are used for driving the winch motors.

The VFDs allow the winch motors to be controlled with vector control, which means that the torque of the motors can be controlled directly from the VFD. The winch motors are each equipped with an encoder which is connected to each motor's VFD. The encoder provides the VFD with information about the position and speed of the winch motor, allowing the winch motor torque to be precisely controlled, even at low speeds.

It is desired to establish the control so that if the speed increases, with a pull in the strap, then the winch motor torque increases, while if the speed decreases, with a slack in the strap, then the torque decreases. This control mode is simple and three is no requirements for geometrical compensations. Since the winch motors always react in relation to themselves and the feedback coming from the strap, the control is not influenced by the way it is connected to the tower. The efficiency of such control is dependent on the movement of the tower being clearly communicated through the line to the winch motor.

With the present invention it is achieved that the installation of WTG components is made possible under wind and wave conditions which otherwise would make the installation impossible.

Furthermore, a continuous monitoring of the movements may be affected by the control system without the need for user input. The control system may stop an installation process in case the control system registers that preset limits are about to be-/are exceeded limits.

Tests shows that the installation system and the method according to the invention is an efficient installation tool for floating vessels and jack up vessels, which reduces the oscillations in a way which may provide an operational limit of up to wave heights of 2.5 m wind speed of 16-18 m/s. This will increase the operation window for installation.

Furthermore, by tests and calculations performed, it has been found that the tower oscillations can be attenuated quickly, and it has shown that a preset limit for amplitude of the oscillations may be reached in less than 10min. The attenuation has high attenuation efficiency even in unfavorable geometric conditions and the oscillation amplitude is quickly reduced to the preset acceptable amplitude. The preset acceptable amplitude may be between 30 and 70 mm, preferably approximately 50 mm.

The control system used in the installation system and method according to the present invention is based on principles disclosed in European Patent EP 2 526 042 of the same applicant for controlling a rotation of a load, for example a windmill blade around a bearing wire.

Even though the invention is described in connection with use for installation it is to be understood that the system and method according to the invention may also be used for service work on a wind turbine and for uninstalling of a wind turbine.

The control system measures the movement of the wind turbine tower. Based on this measurement of the tower movements, the control system activates the winches to counteract these movements hereby creating a damping the movements of the tower. This is affected until tower a pre-set limit for the oscillation is reached. Typically, an amplitude of 50 mm is an acceptable limit.

The winches may provide for a tension or a slack in the straps.

The winches are individually dynamically controlled by the wind turbine tower's own movement to counteract this movement pattern. The movement of the tower and the nacelle are monitored by one or more accelerometers or other monitoring device that actively communicate with the control system.

The control system is provided for controlling the operation of the winch motors. The winch motors may operate simultaneously with the same or dissimilar rotation speeds. Thus, the winch motors may operate individually. The control system comprises tension sensor means for determining the tension in the straps and spool rotation sensor means for determining the position and the operation of the spool. The sensors are operating continuously during use of the installation system to provide feedback of the operation to the control system.

The control system may be provided with an output means for providing the sensor measurements to the crane operator or a data logger. Furthermore, the control system may be provided with warning signals provided to the crane operator, when preset limits are about to be-/are exceeded. This will enable the crane operator to interrupt the installation and bring the load into a safe condition if for example the wave and/or wind conditions change, and oscillations exceeds a predefined limit. As mentioned above control system may also be arranged for interrupting the installation without the need that the crane operator manually effect an interruption.

There is used a first winch and a second winch. The winches are controlled mutual depending on each other. The winches may be identical or different. Rotating the spools with a rotation speed performs the winding/unwinding. The control system is controlling the spool rotation of the winch by controlling the winch motor based on tension sensor measurements. The control system is using the spool rotation sensor measurement as feedback to verify correct spool rotation.

The second winch may be set to follow the first winch. In a symmetrical condition the rotation speed of the second winch is equal to the rotation speed of the first winch. In an asymmetrical condition the rotation speed of the second winch is not equal to the rotation speed of the first winch.

According to a further embodiment, the wind turbine installation system is peculiar in that the monitoring device, which is arranged for monitoring the relative movements/oscillation of the tower comprises an accelerometer.

The accelerometer is preferably placed at top of the tower (or the top of a monopile fundament). Therefore, the given maximum and permissible tower amplitude is converted to a corresponding acceleration. This is done by differentiating the formed position curve, in this way speed and acceleration curves can be formed for the tower. The maximum acceleration for the tower can thus be found.

A maximum permissible acceleration may be found for the actual tower. For each tower, the maximum acceleration may correspond to a tower amplitude of for example 400mm and the maximum permissible acceleration may correspond to a tower amplitude of for example 50 mm.

According to a further embodiment, the wind turbine installation system is peculiar in that the wind turbine installation system comprises a transition piece arranged to be attached to the tower or in case of an offshore wind turbine a fundament for the tower and that the strap or straps are attached to the transition piece.

Hereby it is possible in a technically simple way to establish an attachment point for the attaching the straps to the tower or the fundament in case of an offshore wind turbine.

According to a further embodiment, the wind turbine installation system is peculiar in that the wind turbine installation system comprises a redirection roller for each strap.

If the winch or winches are arranged in a fixed position on a vessel, it will be possible provide redirection rollers for each strap. Such redirection rollers may be placed on the vessel in such a way that the mutual angle between the straps is established when two winches are used.

The winch or winches may be arranged in a fixed position on the ground, for example on a fundament or vehicle arranged in a fixed position It will be possible provide redirection rollers for each strap. Such redirection rollers may be placed on the ground in such a way that the mutual angle between the straps is established when two winches are used.

Moreover, the redirection roller may also influence on the angle established between the tower and each strap.

Hereby, it is possible to adjust the mutual angle between two straps and also in an easy way adjust the angle between the tower and each strap.

According to a further embodiment, the wind turbine installation system is peculiar in that the control system comprises a frequency converter or frequency converters for driving the winch motor or winch motors.

The use of frequency converters allows the winch motor or winch motors to be controlled with vector control. As explained earlier this means that the torque of the motors can be controlled directly from the frequency converters. This control of the winch motors creates the possibility for a technical simple and very precise control.

According to a further embodiment, the wind turbine installation system is peculiar in that the that the connection between the control system and the sensors and/or the control system and each winch motor is wireless.

It is herewith achieved that the control system may be located away from the sensors and winches.

This is especially advantageous because the system does not require electrical wiring to be applied between the various parts of the system on the vessel and the parts on the tower or fundament. The system is therefore easy to install in temporary installations with a minimal installation time.

According to a further embodiment, the method is peculiar in hat the method comprises the step of
- providing a redirection roller for each strap.

In accordance with a further aspect where two winches are used the method comprises the step of
- arranging the redirection rollers to obtain the desired mutual angle between the straps.

As mentioned above the redirection roller for a strap is a technical simple solution for obtaining a desired mutual angle between the straps and also a desired angle between a strap and the tower.

According to a further embodiment, the method is peculiar in hat the method comprises the steps of
- providing a frequency converter or frequency converters for the control system,
- driving the winch motor or the winch motors with the frequency converter or the frequency converters, and
- controlling the winch motor or winch motors with vector control, for controlling the torque of the winch motor or the winch motors directly from the frequency converter or the frequency converters.

As mentioned above the use of frequency converters for controlling the winch motors is precise controlled which makes it possible to use vector control. Hereby the torque of the motors can be controlled directly.

According to a further embodiment, the method for installation of an offshore wind turbine is peculiar in hat the method comprises the steps of
- providing a transition piece,
- attaching the transition piece to the tower, the nacelle or the fundament and
- attaching the strap or straps to the transition piece.

According to a further embodiment, the method for installation of an onshore wind turbine is peculiar in hat the method comprises the steps of
- providing a transition piece,
- attaching the transition piece to the tower or the nacelle and
- attaching the strap or straps to the transition piece.

When attaching the strap to a transition piece it is easy to adapt attachment means for the strap or straps with corresponding attachment means on the transition piece. The transition piece will especially be of interest when it is a fundament of the tower in an offshore wind turbine where oscillations should be attenuated in the fundament due to influence from wave movements and ocean flows.

In such situation the transition piece will normally be arranged on the fundament before arranging a tower on the fundament.

The installation system of the present invention is suitable for cooperation with the system disclosed in European Patent EP 2 526 042 of the same applicant. The control system to be used in the present invention is a modification of the control system disclosed in EP 2 526 042 where the control system is used for controlling the rotation of a component around a bearing wire which is used for suspending a load in crane. However, the system may be modified for use with one strap or two straps in attenuating the oscillations in a tower or monopile fundament.

The use on one winch or two winches to reduce the influence from wind on a wind turbine tower or fundament is an efficient system for effecting an installation in a precise and secure way without posing a risk to personnel when installing the wind turbine component.

It may be possible to replace the winch with other types of actuators. For example, linear actuators of piston cylinder type may be used. Such actuators may be hydraulically or electrically driven. Such actuators should be arranged to be controlled by the control system in order for the actuators to work so that when the tower moves away from the winch, the winch actuator will raise the pull effect, thereby attenuating the amplitude of current oscillation and be able to tighten the strap when the tower moves against the actuator.

A linear actuator may be used alone or in combination with a winch.

The important feature for the invention is that the system includes use of one or more actuation mechanisms with tension and slack function.

The actuation mechanisms shall be individually dynamically controlled by the movement of the tower or fundament to counteract this movement pattern.

The movement of the tower, nacelle or fundament are monitored by one or more monitoring devices, typically accelerometers, that actively communicate with the actuation mechanism via a control system.

Tests and calculation have illustrated that an attenuating effect is obtainable with traction forces in the magnitude of 65 kN to 250 kN. These traction forces are obtainable with winches which in the prior art are used for tagline tension and for guide wire tension.

Accordingly, it is possible to use prior art winches in the installation system according to the present invention.

### Description of the Drawing

In the following embodiments of the present invention will be further explained with reference to the accompanying drawing, in which
- Fig. 1: illustrates a top of a tower and a nacelle and illustrating the oscillations of the tower relative to a crane,
- Fig. 2: illustrates a prior art vessel with a crane using a tagline master system for offshore installation of a wind turbine blade,
- Fig. 3: illustrates a sketch as seen from the side of a system according to the present invention,
- Fig. 4: illustrates a sketch of the system illustrated in Fig. 3 as seen from above,
- Fig. 5: illustrates a sketch corresponding to Fig. 3 of a further embodiment of a system according to the present invention,
- Fig. 6: illustrates a sketch of the system illustrated in Fig. 5 as seen from above,
- Fig. 7: illustrates a sketch illustrating an embodiment for the wind turbine installation system according to the present invention seen from the side,
- Fig. 8: illustrates a sketch of the embodiment of Fig. 7 seen from above,
- Fig. 9: is a sketch illustrating another embodiment for the wind turbine installation system as seen from the side,
- Fig. 10: is an illustration seen from above to illustrate a mutual angle between two straps being attached to the tower,
- Fig. 11: illustrates a sketch seen from the side corresponding to Fig. 10 illustrating use of redirection rollers in a first position,
- Fig. 12: illustrates a sketch corresponding to Fig. 11illustrating use of redirection rollers in a different position,
- Fig. 13: is a sketch corresponding to Fig. 3 of a system according to the present invention for installation of an onshore wind turbine,
- Fig. 14: is a sketch of the system illustrated in Fig. 3 for installation of an onshore wind turbine, and
- Fig. 15: is a sketch corresponding to Fig. 6 of a further embodiment for a system according to the present invention for installation of an onshore wind turbine.

### Detailed Description of the Invention

In the different figures identical or corresponding elements will be denoted with the same reference numeral. Accordingly, each item will not be described in connection with each figure.

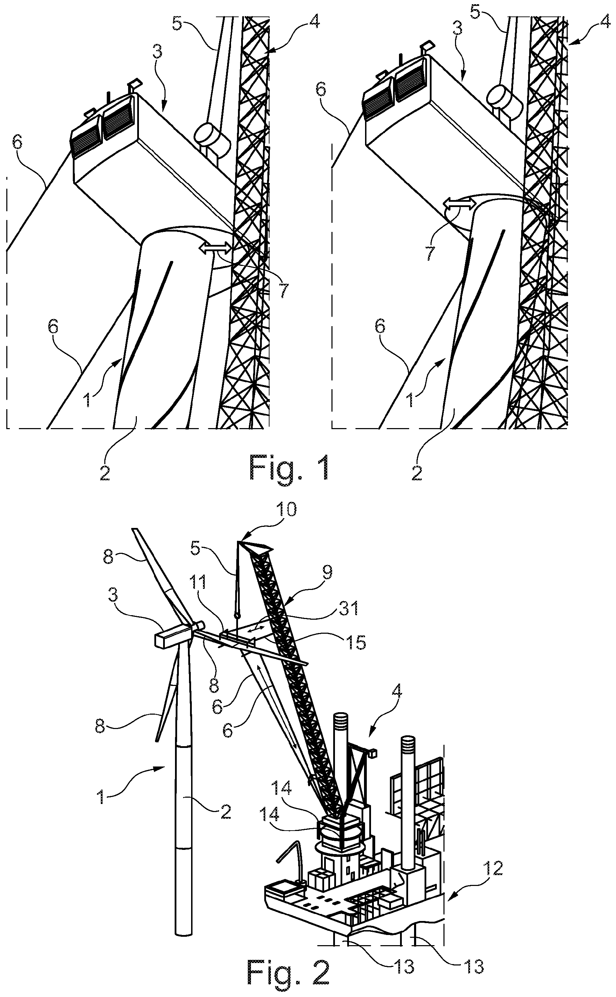

Fig. 1 illustrates a prior art installation in order to illustrate the oscillations. The offshore wind turbine 1 comprises a tower 2. On top of the tower a nacelle 3 is arranged. Moreover, a crane 4 is used for the installation. 5 illustrates bearing wire used for installation of the nacelle 3 on top of the tower 2. In Fig. 1 also two taglines 6 are visible. The difference between the illustration to the left in Fig. 1 and to the right in Fig. 1 clearly shows the oscillation and thereby the different distances occurring between the tower 2 and the crane 4.

The oscillations in the tower are due to influence from wind, waves and ocean currents.

In the illustrations in Fig. 1 the nacelle 3 hanging in the bearing wire 5 is kept in constant position whereas the tower 2 is subject to substantial oscillations. In practise it has shown that the oscillations may have an amplitude of 400-500 mm for an offshore wind turbine.

The oscillating is illustrated with the double arrow 7 at the bottom of the nacelle 3.

Fig. 2 illustrates a prior art system with taglines. The offshore wind turbine is illustrated comprising the tower 2 with nacelle 3 and blades 8.

The crane 4 comprises a crane boom 9 where the bearing wire 5 is arranged at the top 10 of the crane boom 9. The taglines 6 are attached to a yoke 11 which is connected to the bearing wire 5. In the present situation the yoke 11 is illustrated in an operation for installation of a blade 8.

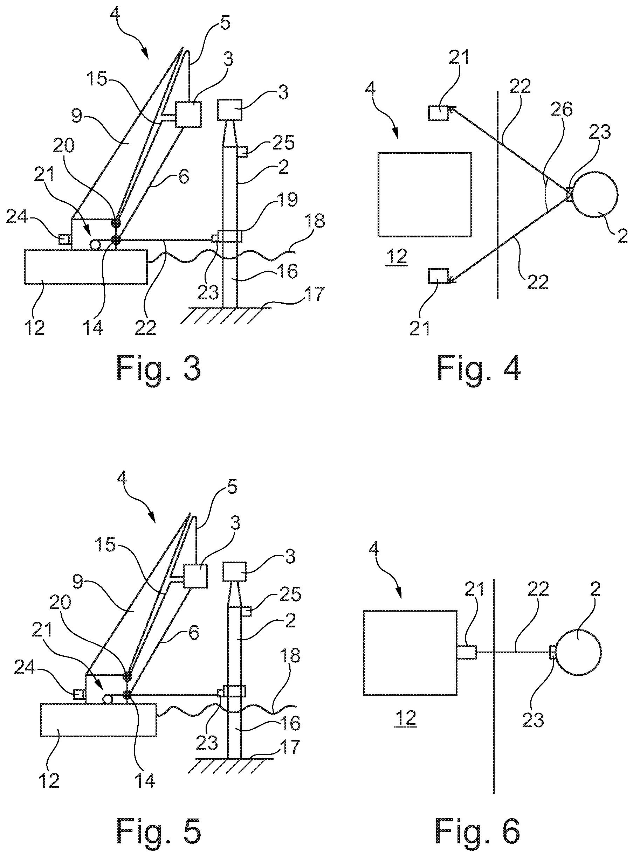

The crane 4 is arranged on an installation vessel 12 comprising legs 13 to be arranged at the seabed 17 (see Fig.3) during installation.

In the crane there are provide tagline winches 14 for the taglines 6 and also lifting winches (not illustrated) for the bearing wire 5 are provided.

Moreover, the illustrated crane 4 has guide wires 15 which is connected with the yoke 11. The double arrow 31 illustrates how the guide wires 15 may move the yoke 11 closer to the crane boom 9 or further away from the crane boom 9.

Fig. 3-6 illustrate sketches of a system according to the present invention.

The tower 2 is connected to a monopile fundament 16which is mounted at the seabed 17 below the sea level 18.

The monopile fundament 16 comprises a transition piece or a connecting platform 19 on which the tower 2 is attached.

The side views in Figs. 3 and 5 are for illustrative purposes illustrated with the nacelle 4 arranged in the bearing wire 5 and being connected with the taglines 6 and the guide wires 5.

In Figs. 3 and 5 there is an illustration of a guide wire winch 20 connected with the guide wire 15.

Figs. 3 and 4 illustrate that two winches 21 are arranged at the installation vessel 12. Each winch 21 is connected with a strap 22. Each of the straps 22 are provided with attachment means 23 for attachment to the tower 2. In the illustrated situation the attachment is affected through the transition piece 19.

Alternatively, the straps 22 may be connected directly to the tower 2.

Each winch 21 comprises a winch motor and a by-directional rotation spool on which the strap 22 is arranged. Such winches are known per see, e.g. from European patent EP 2,526,042.

As illustrated in Fig. 4 the two straps 22 are arranged with a mutual angle 26. In the illustrated situation the angle is approximately 90°. However, the angle may vary between 40° and 120° depending on the position of the winches 21 on the installation vessel 12 and the distance between the installation vessel 12 and the tower 2.

The embodiment illustrated in Figs. 5 and 6 are different from the embodiment illustrated in Figs. 3 and 4 in that only one winch 21 and one strap 22 is provided for attachment to the tower 2.

The installation system comprises a control system indicated with a box 24 in Figs. 3 and 5. Such control system is also described in more detail in the above mentioned European Patent.

Furthermore, the system comprises a monitoring device indicated at 25 in Figs. 3 and 5. The monitoring device may typically be an accelerometer. The monitoring device 25 monitors the oscillations in the tower 2 relatively to the installation vessel 12.

The control system 24 is arranged for controlling the winches 21 individually based on the movement of the tower 2 in order to counteract the oscillations or other movement pattern which may involve a circular movement of the tower.

The control system 24 is communicating with the monitoring device 25, typically by a wireless connection. Moreover, the control system 24 is connected with the winches 21 for controlling their movement in order to establish the desired counteract movement pattern. In that respect the control system 24 comprises tension sensor means (not illustrated) for determining strap tensions and spool rotation sensor means (not illustrated) for determining spool rotation. These sensor means are of the type disclosed in the above-mentioned European patent.

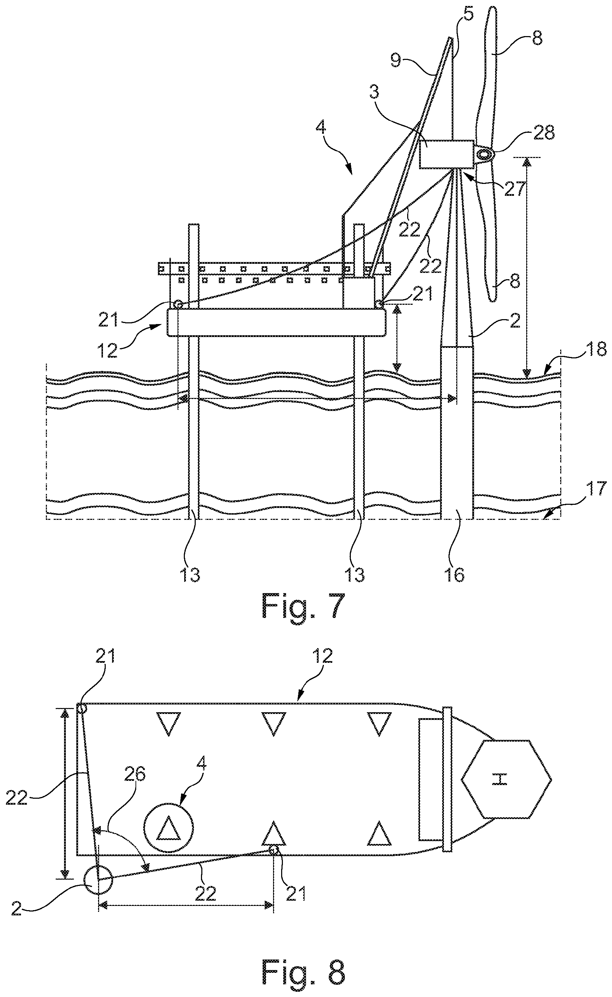

Fig. 7 is a sketch of an embodiment for the wind turbine installation system where the winches 21 are arranged at opposite sides of the installation vessel 12. Fig. 7 illustrates that the straps 22 are attached at a top position 27 of the tower 2.

In Fig. 8 the installation system of Fig. 7 is illustrated as seen from above. It is seen that the winches 21 are arranged on the installation vessel 12 in positions which makes it possible to obtain a mutual angle 26 being approximately 90°. Tests have shown that such mutual angle gives the best possible attenuation of the oscillations in the tower.

The installation vessel 12 used may have a size in the magnitude of 60 x 120 m and the height of the winches 21 above the sea level 18 might be in the magnitude of 20 m. The height between sea level 18 and a hub 28 of the wind turbine may be 120 - 150 m.

It is noted that the above dimensions are only for illustrative purposes and is not limiting the scope of the height for towers and the size of installations ships which may be used in a system and a method according to the present invention.

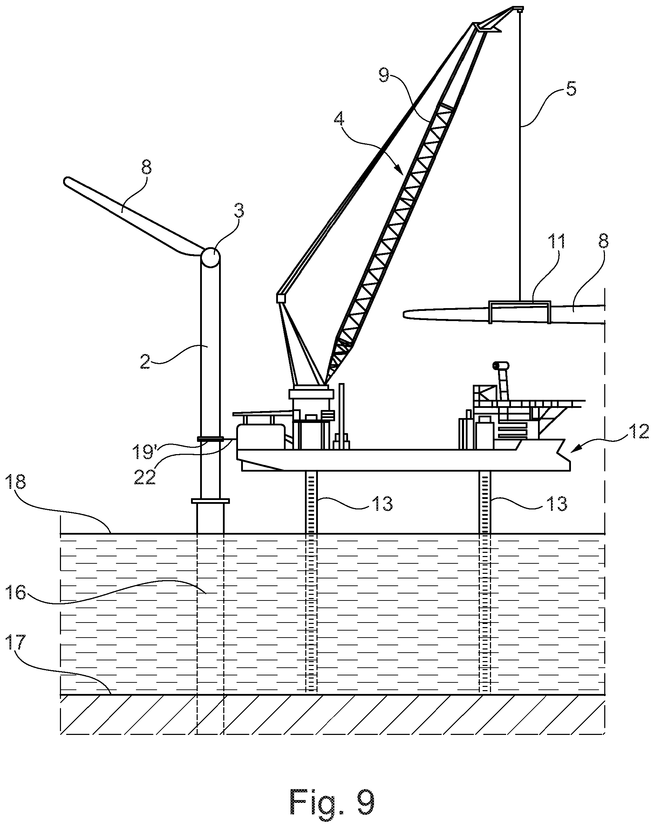

Fig. 9 illustrates another embodiment of the wind turbine installation system as seen from the side.

Fig. 9 corresponds more or less to Fig. 7. However, here it is illustrated that the straps 22 are arranged substantially horizontal from the winch (not illustrated) of the vessel 12 to attachment means 19' which is arranged in a position of the tower 2 in the same height above sea level 18 as the position of the winches 21 (not illustrated).

The attachment means 19' may be a sling or rope arranged around the tower 2 and provided with attachment means for cooperating with the attachment means of the straps 22.

The situation illustrated in Fig. 9 may be used in connection with one or two winches 21 arranged on the installation vessel 12.

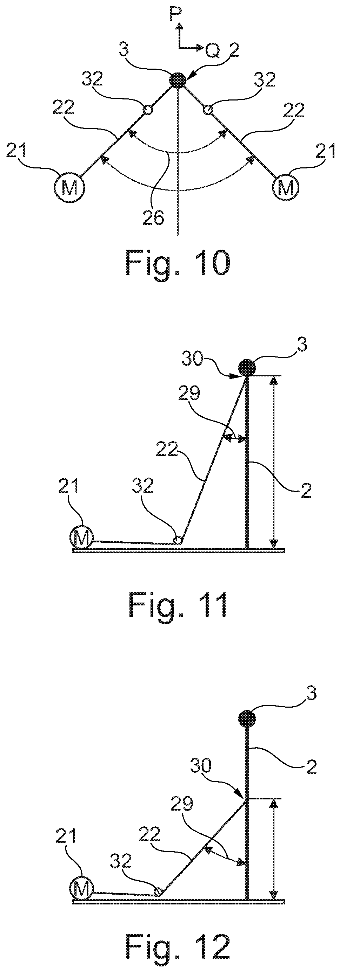

Figs. 10-12 illustrate the mutual position of winches relative to the tower 2.

In the embodiments illustrated in Figs. 10-12 redirection rollers 32 are arranged for each strap 22. Hereby it is possible to have a fixed position of the winches 21 on the installation vessel 12 and change a position of a redirection roller 32 in order to obtain the desired angle 26 between the two straps 22 independently of the position of the winches 21. This is advantageous, seeing that the winches may be securely attached at the installation vessel in fixed positions. The redirection rollers 32 may be easily arranged in a position at the vessel where it is convenient in order to obtain the desired angle 26.

Moreover, the use of redirection rollers 32 also makes it possible to change an angle 29 between the tower 2 and the portion of the strap 22 being provided between the redirection roller 32 and the point of attachment 30 to the tower.

As a further comment to the use of redirection rollers 32 it should be realised that an attachment point 30 should be arranged as high as possible on the tower 2. However, in some situations the attachment point 30 would be arranged at a lower position on the tower.

The point of attachment 30 may also be arranged at the top of a monopile fundament 16, seeing that the ocean current may cause oscillations in the monopile fundament, which should be attenuated when arranging a tower on the monopile fundament 16.

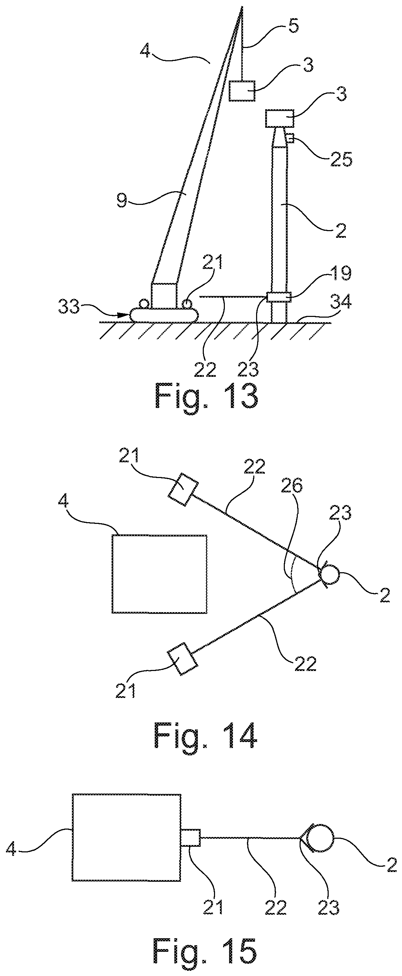

Figs 13-15 differs from the embodiments illustrated in Figs 3-6 in that the system is for installation of an onshore wind turbine.

In Figs 13-15 the crane 4 is arranged on an undercarriage 33 standing on the ground (34) where also the tower 4 for an onshore wind turbine is arranged. A guide wire 15 and taglines 6 may also be provided in these embodiments but are omitted for clarity.

## Claims

1. Wind turbine installation system for installation of an onshore or offshore wind turbine (1) comprising a tower (2) and a nacelle (3) arranged on a fundament (16), wherein said system comprises
a crane arrangement and at least one winch (21),
a control arrangement which comprises a winch control system (24) and a monitoring device (25), which is arranged for monitoring the relative movements/oscillation of the tower (2) relative to a ground when installing an onshore wind turbine or relative to a vessel when installing an offshore wind turbine and which monitoring device (25) is arranged at the tower (2) or nacelle (3),
**characterized in that** said winch (21) has a winch motor and a bi-directional rotational spool with a strap (22), wherein the winch (21) preferably is placed in a distance from the tower (2), wherein said strap (22) is provided with attachment means (23), for applying a controlled pull on the tower (2) or the nacelle (3), that the control system (24) comprises tension sensor means for determining strap tension and spool rotation sensor means for determining spool rotation, and wherein the control system (24) is controllably connected to said winch motor for controlling spool rotation in order to induce counter movements to the oscillations in the tower (2) and thereby stabilize the tower (2).

2. Wind turbine installation system according to claim 1 for installation of an offshore wind turbine, **characterized in that** said winch (21) preferably is placed on an installation vessel (12), wherein said strap (22) is provided with attachment means (23), preferably for attachment to the tower (2), the nacelle (3) or the fundament (16) of the wind turbine and for applying a controlled pull on the tower, the nacelle or the fundament, the monitoring device (25) is arranged for monitoring the movements/oscillation of the tower (2) or fundament (16) relative to the vessel (12) and which monitoring device (25) is arranged at the tower, the nacelle or the fundament , and wherein the control system (24) is controllably connected to said winch motor for controlling spool rotation in order to induce counter movements to the oscillations in the tower or fundament and thereby stabilize the tower or fundament.

3. The wind turbine installation system according to claim 2, **characterized in that** the wind turbine installation system comprises two winches (21), each of said winches (21) having a winch motor and a bi-directional rotational spool with a strap (22), wherein the winches (21) are placed on the installation vessel (12), wherein each strap (22) is provided with attachment means (23) for attachment to the tower (2), the nacelle (3) or the fundament (16) of the wind turbine (1) and for applying a controlled pull on the tower, the nacelle or the fundament.

4. The wind turbine installation system according to claim 1, 2 or 3, **characterized in that** the wind turbine installation system comprises a transition piece (19) arranged to be attached to the tower (2) or the fundament (16) for the tower and that the strap or straps (22) are attached to the transition piece (19).

5. Wind turbine installation system according to claim 1 for installation of an onshore wind turbine, **characterized in that** said winch (21) preferably is placed on the ground (34), wherein said strap (22) is provided with attachment means (23), preferably for attachment to the tower or the nacelle of the wind turbine.

6. The wind turbine installation system according to claim 5, **characterized in that** the wind turbine installation system comprises two winches (21), each of said winches having a winch motor and a bi-directional rotational spool with a strap (22).

7. The wind turbine installation system according to claim 2 or 6, **characterized in that** the, that the straps are arranged with a mutual angle (26), which angle is between 40° and 120°, preferably between 45° and 110° and more preferably between 75° and 95°, and most preferably 90°.

8. The wind turbine installation system according to claim 1, 5, 6 or 7, **characterized in that** the wind turbine installation system comprises a transition piece (19) arranged to be attached to the tower (2) and that the strap or straps (22) are attached to the transition piece (19).

9. Method for installation of an onshore or offshore wind turbine (1) comprising a tower (2) and a nacelle (3) arranged on a fundament (16), which method comprises the steps of
- providing a crane (4) for lifting wind turbine components and positioning said crane (4) at a site of installation of the wind turbine,
- providing a winch arrangement, comprising at least one winch (21),
- providing a control arrangement which comprises a winch control system (24) and a monitoring device (25), which is arranged for monitoring the relative movements/oscillation of the tower (2) and which monitoring device (25) is arranged at the tower (2) or nacelle (3),
- positioning a monitoring device (25), which is arranged for monitoring the relative movements/oscillation of the tower relative to a ground when installing an onshore wind turbine or relative to a vessel when installing an offshore wind turbine,
- connecting the monitoring device (25) with the control system (24),
- **characterized in that** the method comprises the steps of
- providing said winch with a winch motor and a bi-directional rotational spool with a strap (22), wherein said strap (22) is arranged for applying a controlled pull on the tower (2) or the nacelle (3), and
- providing the winch control system (24) which comprises tension sensor means for determining strap tension and spool rotation sensor means for determining spool rotation, and wherein the control system (24) is controllably connected to said winch motor for controlling spool rotation,
- providing attachment means (23) for attachment to the strap (22),
- placing the winch (21) for establishing a distance between the winch (21) and the attachment means (23), preferably be placing the winch (21) in a distance from the tower (2),
- tying the strap (22) between said winch (21) and said attachment means (23),
- activating the winch motor until preset strap tension is reached in the strap (22),
- monitoring the relative movements/oscillation of the tower (2) relative to the ground when installing an offshore wind turbine or relative to the vessel when installing an offshore wind turbine,
- during movement/oscillations of the tower, the control system (24) activates the winch motor for rotation, if necessary, the spool with a rotation speed to counteract these movements hereby damping the movements of the tower (2) until a pre-set limit for the oscillation is reached,
- conducting the installation procedure for the wind turbine component to be installed,
- relieving the tension in strap by rotating the spool, and
- disconnecting the attachment means (23).

10. Method according to claim 9 for installation of an offshore wind turbine **characterized in that** the method comprises the steps of
- providing an installation vessel (12) provided with said crane (4) for lifting wind turbine components
- providing the winch (21) on the tower (2) or fundament (16) or preferably on the installation vessel (12),
- providing the attachment means (23) for said strap (22) on the vessel (12) or preferably on the tower (2), the nacelle (3) or the fundament (16) for the offshore wind turbine, wherein said strap (22) is arranged for applying a controlled pull on the tower, the nacelle or the fundament,
- positioning the monitoring device (25) at the tower, the nacelle or the fundament,
- positioning said installation vessel (12) at a site of installation of the offshore wind turbine,
- tying the strap (22) between said winch (21) and said attachment means (23),
- monitoring the relative movements/oscillation of the tower (2) or fundament (16) relative to the vessel (12),
- during movement/oscillations of the tower or fundament, the control system (24) activates the winch motor for rotation, if necessary, the spool with a rotation speed to counteract these movements hereby damping the movements of the tower (2) or fundament (16) until a pre-set limit for the oscillation is reached.

11. The method according to claim 10, **characterized in that** the method comprises the steps of
- providing a winch arrangement, comprising two winches (21), each of said winches having a winch motor and a bi-directional rotational spool with a strap (22), wherein the winches are placed on the installation vessel (12), wherein each strap (22) is provided with attachment means (23) for attachment to the tower, the nacelle or the fundament for the offshore wind turbine, wherein the straps (22) are arranged for applying a controlled pull on the tower (2), the nacelle (3) or the fundament (16), and wherein the control system is controllably connected to each winch motor for controlling spool rotations,
- activating the winch motors until preset strap tensions is reached in the two straps (22), and
- during movement/oscillations of the tower, the control system (24) activates the winch motors for rotation, if necessary, the spools with a rotation speed to counteract these movements hereby damping the movements of the tower (2) until a pre-set limit for the oscillation is reached.

12. Method according to claim 9 for installation of an onshore wind turbine **characterized in that** the method comprises the steps of
- providing the winch (21) on the tower (2) or preferably on the ground (34) in a distance from the tower (2),
- providing the attachment means (23) for said strap (22) on the ground in a distance from the tower (2) or preferably on the tower (2) or the nacelle (3),
- applying a controlled pull on the tower (2) or the nacelle (3).

13. Method according to claim 9 or 12 for installation of an onshore wind turbine **characterized in that** the method comprises the steps of
- providing a winch arrangement, comprising two winches (21), each of said winches having a winch motor and a bi-directional rotational spool with a strap (22), wherein the winches (21) are placed on the ground (34), wherein each strap (22) is provided with attachment means (23) for attachment to the tower (2) or the nacelle (3), wherein the straps (22) are arranged for applying a controlled pull on the tower or the nacelle, and wherein the control system (24) is controllably connected to each winch motor for controlling spool rotations,
- activating the winch motors until preset strap tensions is reached in the two straps (22), and
- during movement/oscillations of the tower (2), the control system (24) activates the winch motors for rotation, if necessary, the spools with a rotation speed to counteract these movements hereby damping the movements of the tower (2) until a pre-set limit for the oscillation is reached.

14. The method for according to anyone of the claims 9 to 13, **characterized in that** the method comprises the steps of
- providing a frequency converter or frequency converters for the control system (24),
- driving the winch motor or motors with the frequency converter or the frequency converters, and
- controlling the winch motor or the winch motors with vector control, for controlling the torque of the winch motor or the winch motors directly from the frequency converters.

15. The method according to anyone of the claims 9-13, **characterized in that** the method comprises the steps of
- providing a transition piece (19),
- attaching the transition piece (19) to the tower (2), the nacelle (3) or the fundament (16) and
- attaching the strap or straps (22) to the transition piece (19).

## Patentansprüche

1. Windturbinenausrüstungssystem zur Installation einer Onshore- oder Offshore-Windturbine (1), umfassend einen Turm (2) und eine auf einem Fundament (16) angeordnete Gondel (3), wobei das System umfasst
eine Krananordnung und mindestens eine Winde (21),
eine Steuereinrichtung, die ein Windensteuerungssystem (24) und eine Überwachungsvorrichtung (25) umfasst, wobei diese dazu eingerichtet ist, die relativen Bewegungen bzw. Schwingungen des Turms (2) relativ zu einem Untergrund beim Installieren einer Onshore-Windturbine oder relativ zu einem Schiff beim Installieren einer Offshore-Windturbine zu überwachen, und wobei die Überwachungsvorrichtung (25) am Turm (2) oder an der Gondel (3) angeordnet ist,
**dadurch gekennzeichnet, dass** die Winde (21) einen Windenmotor und eine bidirektional drehbare Spule mit einem Gurt (22) aufweist, wobei die Winde (21) vorzugsweise in einem Abstand vom Turm (2) angeordnet ist, wobei der Gurt (22) mit Befestigungsmitteln (23) bereitgestellt ist, um eine gesteuerte Zugkraft auf den Turm (2) oder die Gondel (3) auszuüben, dass das Steuersystem (24) Zugspannungssensoreinrichtungen zum Bestimmen der Gurtespannung und Spulendrehsensoreinrichtungen zum Bestimmen der Spulendrehung umfasst, und wobei das Steuersystem (24) steuerbar mit dem Windenmotor verbunden ist, um die Spulendrehung zu regeln, um Gegenbewegungen zu den Schwingungen im Turm (2) zu erzeugen und dadurch den Turm (2) zu stabilisieren.

2. Windturbinenausrüstungssystem nach Anspruch 1 zur Installation einer Offshore-Windturbine, **dadurch gekennzeichnet, dass** die Winde (21) vorzugsweise auf einem Installationsschiff (12) angeordnet ist, wobei der Gurt (22) mit Befestigungsmitteln (23) bereitgestellt ist, vorzugsweise zur Befestigung am Turm (2), an der Gondel (3) oder am Fundament (16) der Windturbine und zum Ausüben einer gesteuerten Zugkraft auf den Turm, die Gondel oder das Fundament, die Überwachungsvorrichtung (25) dazu eingerichtet ist, die Bewegungen bzw. Schwingungen des Turms (2) oder des Fundaments (16) relativ zu dem Schiff (12) zu überwachen, und wobei die Überwachungsvorrichtung (25) am Turm, an der Gondel oder am Fundament angeordnet ist, und wobei das Steuersystem (24) steuerbar mit dem Windenmotor verbunden ist, um die Spulendrehung zu regeln, um Gegenbewegungen zu den Schwingungen im Turm oder Fundament zu erzeugen und dadurch den Turm oder das Fundament zu stabilisieren.

3. Windturbinenausrüstungssystem nach Anspruch 2, **dadurch gekennzeichnet, dass** das Windturbinenausrüstungssystem zwei Winden (21) umfasst, wobei jede der Winden (21) einen Windenmotor und eine bidirektional drehbare Spule mit einem Gurt (22) aufweist, wobei die Winden (21) auf dem Installationsschiff (12) angeordnet sind, wobei jeder Gurt (22) mit Befestigungsmitteln (23) bereitgestellt ist, zur Befestigung am Turm (2), an der Gondel (3) oder am Fundament (16) der Windturbine (1) und zum Ausüben einer gesteuerten Zugkraft auf den Turm, die Gondel oder das Fundament.

4. Windturbinenausrüstungssystem nach einem der Ansprüche 1, 2 oder 3, **dadurch gekennzeichnet, dass** das Windturbinenausrüstungssystem ein Übergangsstück (19) umfasst, das so angeordnet ist, dass es am Turm (2) oder am Fundament (16) für den Turm befestigt werden kann, und dass der oder die Gurte (22) an dem Übergangsstück (19) befestigt sind.

5. Windturbinenausrüstungssystem nach Anspruch 1 zur Installation einer Onshore-Windturbine, **dadurch gekennzeichnet, dass** die Winde (21) vorzugsweise auf dem Boden (34) angeordnet ist, wobei der Gurt (22) mit Befestigungsmitteln (23) bereitgestellt ist, vorzugsweise zur Befestigung am Turm oder an der Gondel der Windturbine.

6. Windturbinenausrüstungssystem nach Anspruch 5, **dadurch gekennzeichnet, dass** das Windturbinenausrüstungssystem zwei Winden (21) umfasst, wobei jede der Winden (21) einen Windenmotor und eine bidirektional drehbare Spule mit einem Gurt (22) aufweist.

7. Windturbinenausrüstungssystem nach Anspruch 2 oder 6, **dadurch gekennzeichnet, dass** die Gurte mit einem gegenseitigen Winkel (26) angeordnet sind, wobei dieser Winkel zwischen 40° und 120°, vorzugsweise zwischen 45° und 110°, weiter vorzugsweise zwischen 75° und 95° und am meisten bevorzugt 90° beträgt.

8. Windturbinenausrüstungssystem nach einem der Ansprüche 1, 5, 6 oder 7, **dadurch gekennzeichnet, dass** das Windturbinenausrüstungssystem ein Übergangsstück (19) umfasst, das so angeordnet ist, dass es am Turm (2) befestigt werden kann, und dass der oder die Gurte (22) an dem Übergangsstück (19) befestigt sind.

9. Verfahren zur Installation einer Onshore- oder Offshore-Windturbine (1), umfassend einen Turm (2) und eine auf einem Fundament (16) angeordnete Gondel (3), wobei das Verfahren die folgenden Schritte umfasst
Bereitstellen eines Krans (4) zum Heben von Windturbinenkomponenten und Positionieren des Krans (4) an einem Installationsort der Windturbine,
Bereitstellen einer Windenanordnung, die mindestens eine Winde (21) umfasst,
Bereitstellen einer Steuereinrichtung, die ein Windensteuerungssystem (24) und eine Überwachungsvorrichtung (25) umfasst, wobei die Überwachungsvorrichtung (25) dazu eingerichtet ist, die relativen Bewegungen bzw. Schwingungen des Turms (2) zu überwachen, und wobei die Überwachungsvorrichtung (25) am Turm (2) oder an der Gondel (3) angeordnet ist,
Positionieren einer Überwachungsvorrichtung (25), die dazu eingerichtet ist, die relativen Bewegungen bzw. Schwingungen des Turms relativ zu einem Untergrund beim Installieren einer Onshore-Windturbine oder relativ zu einem Schiff beim Installieren einer Offshore-Windturbine zu überwachen,
Verbinden der Überwachungsvorrichtung (25) mit dem Steuersystem (24),
**dadurch gekennzeichnet, dass** das Verfahren die folgenden Schritte umfasst
Bereitstellen der Winde mit einem Windenmotor und einer bidirektional drehbaren Spule mit einem Gurt (22), wobei der Gurt (22) dazu eingerichtet ist, eine gesteuerte Zugkraft auf den Turm (2) oder die Gondel (3) auszuüben, und
Bereitstellen des Windensteuerungssystems (24), das Zugspannungssensoreinrichtungen zum Bestimmen der Gurtspannung und Spulendrehsensoreinrichtungen zum Bestimmen der Spulendrehung umfasst, und wobei das Steuersystem (24) steuerbar mit dem Windenmotor verbunden ist, um die Spulendrehung zu regeln,
Bereitstellen von Befestigungsmitteln (23) zur Befestigung am Gurt (22),
Positionieren der Winde (21), um einen Abstand zwischen der Winde (21) und den Befestigungsmitteln (23) herzustellen, vorzugsweise durch Anordnen der Winde (21) in einem Abstand vom Turm (2),
Spannen des Gurts (22) zwischen der Winde (21) und den Befestigungsmitteln (23),
Aktivieren des Windenmotors, bis in dem Gurt (22) eine voreingestellte Gurtspannung erreicht ist,
Überwachen der relativen Bewegungen bzw. Schwingungen des Turms (2) relativ zum Untergrund beim Installieren einer Onshore-Windturbine oder relativ zu dem Schiff beim Installieren einer Offshore-Windturbine,
wobei während der Bewegungen bzw. Schwingungen des Turms das Steuersystem (24) den Windenmotor ggf. zur Drehung der Spule mit einer Drehgeschwindigkeit aktiviert, um diesen Bewegungen entgegenzuwirken und dadurch die Bewegungen des Turms (2) zu dämpfen, bis eine voreingestellte Grenze für die Schwingung erreicht ist,
Durchführen des Installationsvorgangs für die zu installierende Windturbineneinheit,
Entlasten der Spannung im Gurt durch Drehen der Spule, und Trennen der Befestigungsmittel (23).

10. Verfahren nach Anspruch 9 zur Installation einer Offshore-Windturbine, **dadurch gekennzeichnet, dass** das Verfahren die folgenden Schritte umfasst
Bereitstellen eines Installationsschiffs (12), das mit dem Kran (4) zum Heben von Windturbinenkomponenten bereitgestellt ist
Bereitstellen der Winde (21) am Turm (2) oder am Fundament (16) oder vorzugsweise auf dem Installationsschiff (12),
Bereitstellen der Befestigungsmittel (23) für den Gurt (22) auf dem Schiff (12) oder vorzugsweise am Turm (2), an der Gondel (3) oder am Fundament (16) der Offshore-Windturbine, wobei der Gurt (22) dazu eingerichtet ist, eine gesteuerte Zugkraft auf den Turm, die Gondel oder das Fundament auszuüben,
Positionieren der Überwachungsvorrichtung (25) am Turm, an der Gondel oder am Fundament,
Positionieren des Installationsschiffs (12) an einem Installationsort der Offshore-Windturbine,
Spannen des Gurts (22) zwischen der Winde (21) und den Befestigungsmitteln (23),
Überwachen der relativen Bewegungen bzw. Schwingungen des Turms (2) oder des Fundaments (16) relativ zu dem Schiff (12),
wobei während der Bewegungen bzw. Schwingungen des Turms oder des Fundaments das Steuersystem (24) den Windenmotor ggf. zur Drehung der Spule mit einer Drehgeschwindigkeit aktiviert, um diesen Bewegungen entgegenzuwirken und dadurch die Bewegungen des Turms (2) oder des Fundaments (16) zu dämpfen, bis eine voreingestellte Grenze für die Schwingung erreicht ist.

11. Verfahren nach Anspruch 10, **dadurch gekennzeichnet, dass** das Verfahren die folgenden Schritte umfasst
Bereitstellen einer Windenanordnung, die zwei Winden (21) umfasst, wobei jede der Winden (21) einen Windenmotor und eine bidirektional drehbare Spule mit einem Gurt (22) aufweist, wobei die Winden (21) auf dem Installationsschiff (12) angeordnet sind, wobei jeder Gurt (22) mit Befestigungsmitteln (23) bereitgestellt ist, zur Befestigung am Turm, an der Gondel oder am Fundament der Offshore-Windturbine, wobei die Gurte (22) dazu eingerichtet sind, eine gesteuerte Zugkraft auf den Turm (2), die Gondel (3) oder das Fundament (16) auszuüben, und wobei das Steuersystem steuerbar mit jedem Windenmotor verbunden ist, um die Spulendrehungen zu regeln,
Aktivieren der Windenmotoren, bis in den beiden Gurten (22) eine voreingestellte Gurtspannung erreicht ist, und
wobei während der Bewegungen bzw. Schwingungen des Turms das Steuersystem (24) die Windenmotoren ggf. zur Drehung der Spulen mit einer Drehgeschwindigkeit aktiviert, um diesen Bewegungen entgegenzuwirken und dadurch die Bewegungen des Turms (2) zu dämpfen, bis eine voreingestellte Grenze für die Schwingung erreicht ist.

12. Verfahren nach Anspruch 9 zur Installation einer Onshore-Windturbine, **dadurch gekennzeichnet, dass** das Verfahren die folgenden Schritte umfasst
Bereitstellen der Winde (21) am Turm (2) oder vorzugsweise auf dem Boden (34) in einem Abstand vom Turm (2),
Bereitstellen der Befestigungsmittel (23) für den Gurt (22) auf dem Boden in einem Abstand vom Turm (2) oder vorzugsweise am Turm (2) oder an der Gondel (3),
Ausüben einer gesteuerten Zugkraft auf den Turm (2) oder die Gondel (3).

13. Verfahren nach Anspruch 9 oder 12 zur Installation einer Onshore-Windturbine, **dadurch gekennzeichnet, dass** das Verfahren die folgenden Schritte umfasst
Bereitstellen einer Windenanordnung, die zwei Winden (21) umfasst, wobei jede der Winden (21) einen Windenmotor und eine bidirektional drehbare Spule mit einem Gurt (22) aufweist, wobei die Winden (21) auf dem Boden (34) angeordnet sind, wobei jeder Gurt (22) mit Befestigungsmitteln (23) bereitgestellt ist, zur Befestigung am Turm (2) oder an der Gondel (3), wobei die Gurte (22) dazu eingerichtet sind, eine gesteuerte Zugkraft auf den Turm oder die Gondel auszuüben, und wobei das Steuersystem (24) steuerbar mit jedem Windenmotor verbunden ist, um die Spulendrehungen zu regeln,
Aktivieren der Windenmotoren, bis in den beiden Gurten (22) eine voreingestellte Gurtspannung erreicht ist, und
wobei während der Bewegungen bzw. Schwingungen des Turms (2) das Steuersystem (24) die Windenmotoren ggf. zur Drehung der Spulen mit einer Drehgeschwindigkeit aktiviert, um diesen Bewegungen entgegenzuwirken und dadurch die Bewegungen des Turms (2) zu dämpfen, bis eine voreingestellte Grenze für die Schwingung erreicht ist.

14. Verfahren nach einem der Ansprüche 9 bis 13, **dadurch gekennzeichnet, dass** das Verfahren die folgenden Schritte umfasst
Bereitstellen eines Frequenzumrichters oder mehrerer Frequenzumrichter für das Steuersystem (24),
Antreiben des Windenmotors oder der Windenmotoren mit dem Frequenzumrichter oder den Frequenzumrichtern, und
Steuern des Windenmotors oder der Windenmotoren mittels Vektorregelung, um das Drehmoment des Windenmotors oder der Windenmotoren direkt von den Frequenzumrichtern aus zu regeln.

15. Verfahren nach einem der Ansprüche 9-13, **dadurch gekennzeichnet, dass** das Verfahren die folgenden Schritte umfasst
Bereitstellen eines Übergangsstücks (19),
Befestigen des Übergangsstücks (19) am Turm (2), an der Gondel (3) oder am Fundament (16) und
Befestigen des Gurts oder der Gurte (22) an dem Übergangsstück (19).

## Revendications

1. Système d'installation d'éolienne destiné à l'installation d'une éolienne terrestre ou en mer (1) comprenant une tour (2) et une nacelle (3) agencée sur une fondation (16), dans lequel ledit système comprend
un agencement de grue et au moins un treuil (21),
un agencement de commande qui comprend un système de commande de treuil (24) et un dispositif de surveillance (25), lequel est agencé pour surveiller les mouvements/oscillations relatifs de la tour (2) par rapport au sol lors de l'installation d'une éolienne terrestre ou par rapport à un navire lors de l'installation d'une éolienne en mer, et lequel dispositif de surveillance (25) est agencé au niveau de la tour (2) ou de la nacelle (3),
**caractérisé en ce que** ledit treuil (21) comprend un moteur de treuil et un tambour rotatif bidirectionnel muni d'une sangle (22), dans lequel le treuil (21) est de préférence placé à une certaine distance de la tour (2), dans lequel ladite sangle (22) est munie de moyens de fixation (23) destinés à appliquer une traction contrôlée sur la tour (2) ou sur la nacelle (3), **en ce que** le système de commande (24) comprend des moyens de détection de tension pour déterminer la tension de sangle et des moyens de détection de rotation de tambour pour déterminer la rotation de tambour, et dans lequel le système de commande (24) est relié de manière commandable audit moteur de treuil pour commander la rotation de tambour afin d'induire des contre-mouvements aux oscillations de la tour (2) et stabiliser ainsi la tour (2).

2. Système d'installation d'éolienne selon la revendication 1 destiné à l'installation d'une éolienne en mer, **caractérisé en ce que** ledit treuil (21) est de préférence placé sur un navire d'installation (12), dans lequel ladite sangle (22) est munie de moyens de fixation (23), de préférence pour la fixation à la tour (2), à la nacelle (3) ou à la fondation (16) de l'éolienne, et pour appliquer une traction contrôlée sur la tour, la nacelle ou la fondation, le dispositif de surveillance (25) est agencé pour surveiller les mouvements/oscillations de la tour (2) ou de la fondation (16) par rapport au navire (12), et lequel dispositif de surveillance (25) est agencé au niveau de la tour, de la nacelle ou de la fondation, et dans lequel le système de commande (24) est relié de manière commandable audit moteur de treuil pour commander la rotation de tambour afin d'induire des contre-mouvements aux oscillations de la tour ou de la fondation et stabiliser ainsi la tour ou la fondation.

3. Système d'installation d'éolienne selon la revendication 2, **caractérisé en ce que** le système d'installation d'éolienne comprend deux treuils (21), chacun desdits treuils (21) comportant un moteur de treuil et un tambour rotatif bidirectionnel muni d'une sangle (22), dans lequel les treuils (21) sont placés sur le navire d'installation (12), dans lequel chaque sangle (22) est munie de moyens de fixation (23) pour la fixation à la tour (2), à la nacelle (3) ou à la fondation (16) de l'éolienne (1) et pour l'application d'une traction contrôlée sur la tour, la nacelle ou la fondation.

4. Système d'installation d'éolienne selon la revendication 1, 2 ou 3, **caractérisé en ce que** le système d'installation d'éolienne comprend une pièce de transition (19) agencée pour être fixée à la tour (2) ou à la fondation (16) de la tour, et **en ce que** la ou les sangles (22) sont fixées à la pièce de transition (19).

5. Système d'installation d'éolienne selon la revendication 1 destiné à l'installation d'une éolienne terrestre, **caractérisé en ce que** ledit treuil (21) est de préférence placé sur le sol (34), dans lequel ladite sangle (22) est munie de moyens de fixation (23), de préférence pour la fixation à la tour ou à la nacelle de l'éolienne.

6. Système d'installation d'éolienne selon la revendication 5, **caractérisé en ce que** le système d'installation d'éolienne comprend deux treuils (21), chacun desdits treuils comportant un moteur de treuil et un tambour rotatif bidirectionnel muni d'une sangle (22).

7. Système d'installation d'éolienne selon la revendication 2 ou 6, **caractérisé en ce que** les sangles sont agencées selon un angle (26) entre elles, lequel angle est compris entre 40° et 120°, de préférence entre 45° et 110°, et plus préférentiellement entre 75° et 95°, et de manière préférée entre toutes de 90°.

8. Système d'installation d'éolienne selon la revendication 1, 5, 6 ou 7, **caractérisé en ce que** le système d'installation d'éolienne comprend une pièce de transition (19) agencée pour être fixée à la tour (2) et **en ce que** la ou les sangles (22) sont fixées à la pièce de transition (19).

9. Procédé d'installation d'une éolienne terrestre ou en mer (1) comprenant une tour (2) et une nacelle (3) agencée sur une fondation (16), lequel procédé comprend les étapes consistant à fournir une grue (4) pour soulever les composants de l'éolienne et positionner ladite grue (4) au niveau d'un site d'installation de l'éolienne
fournir un agencement de treuils, comprenant au moins un treuil (21),
fournir un agencement de commande qui comprend un système de commande de treuil (24) et un dispositif de surveillance (25), lequel est agencé pour surveiller les mouvements/oscillations relatifs de la tour (2), et lequel dispositif de surveillance (25) est agencé au niveau de la tour (2) ou de la nacelle (3),
positionner un dispositif de surveillance (25) qui est agencé pour surveiller les mouvements/oscillations relatifs de la tour par rapport au sol lors de l'installation d'une éolienne terrestre ou par rapport à un navire lors de l'installation d'une éolienne en mer,
raccorder le dispositif de surveillance (25) au système de commande (24),
**caractérisé en ce que** le procédé comprend les étapes consistant à
fournir ledit treuil avec un moteur de treuil et un tambour rotatif bidirectionnel muni d'une sangle (22), dans lequel ladite sangle (22) est agencée pour appliquer une traction contrôlée sur la tour (2) ou sur la nacelle (3), et
fournir le système de commande de treuil (24) qui comprend des moyens de détection de tension pour déterminer la tension de la sangle et des moyens de détection de rotation de tambour pour déterminer la rotation du tambour, et dans lequel le système de commande (24) est relié de manière commandable audit moteur de treuil pour commander la rotation du tambour,
fournir des moyens de fixation (23) pour la fixation à la sangle (22),
placer le treuil (21) pour établir une distance entre le treuil (21) et les moyens de fixation (23), de préférence en plaçant le treuil (21) à une certaine distance de la tour (2),
tendre la sangle (22) entre ledit treuil (21) et lesdits moyens de fixation (23),
activer le moteur de treuil jusqu'à ce qu'une tension de sangle prédéterminée soit atteinte dans la sangle (22),
surveiller les mouvements/oscillations relatifs de la tour (2) par rapport au sol lors de l'installation d'une éolienne terrestre ou par rapport au navire lors de l'installation d'une éolienne en mer,
pendant les mouvements/oscillations de la tour, le système de commande (24) active le moteur de treuil pour la rotation, si nécessaire, du tambour à une vitesse de rotation destinée à contrebalancer ces mouvements, amortissant ainsi les oscillations de la tour (2) jusqu'à ce qu'une limite prédéterminée d'oscillation soit atteinte,
effectuer la procédure d'installation du composant d'éolienne à installer,
relâcher la tension dans la sangle en faisant tourner le tambour, et
séparer les moyens de fixation (23).

10. Procédé selon la revendication 9 destiné à l'installation d'une éolienne en mer **caractérisé en ce que** le procédé comprend les étapes consistant à
fournir un navire d'installation (12) équipé de ladite grue (4) pour soulever les composants de l'éolienne
disposer le treuil (21) sur la tour (2) ou sur la fondation (16), ou de préférence sur le navire d'installation (12),
fournir les moyens de fixation (23) pour ladite sangle (22) sur le navire (12) ou de préférence sur la tour (2), la nacelle (3) ou la fondation (16) de l'éolienne en mer, dans lequel ladite sangle (22) est agencée pour appliquer une traction contrôlée sur la tour, la nacelle ou la fondation,
positionner le dispositif de surveillance (25) au niveau de la tour, de la nacelle ou de la fondation,
positionner ledit navire d'installation (12) au niveau d'un site d'installation de l'éolienne en mer,
tendre la sangle (22) entre ledit treuil (21) et lesdits moyens de fixation (23),
surveiller les mouvements/oscillations relatifs de la tour (2) ou de la fondation (16) par rapport au navire (12),
pendant les mouvements/oscillations de la tour ou de la fondation, le système de commande (24) active le moteur de treuil pour la rotation, si nécessaire, du tambour à une vitesse de rotation destinée à contrebalancer ces mouvements, amortissant ainsi les oscillations de la tour (2) ou de la fondation (16) jusqu'à ce qu'une limite prédéterminée d'oscillation soit atteinte.

11. Procédé selon la revendication 10, **caractérisé en ce que** le procédé comprend les étapes consistant à
fournir un agencement de treuils comprenant deux treuils (21), chacun desdits treuils comprenant un moteur de treuil et un tambour rotatif bidirectionnel muni d'une sangle (22), dans lequel les treuils sont placés sur le navire d'installation (12), dans lequel chaque sangle (22) est munie de moyens de fixation (23) pour la fixation à la tour, à la nacelle ou à la fondation de l'éolienne en mer, dans lequel les sangles (22) sont agencées pour appliquer une traction contrôlée sur la tour (2), la nacelle (3) ou la fondation (16), et dans lequel le système de commande est relié de manière commandable à chaque moteur de treuil pour commander la rotation des tambours,
activer les moteurs de treuils jusqu'à ce que des tensions de sangles prédéterminées soient atteintes dans les deux sangles (22), et
pendant les mouvements/oscillations de la tour, le système de commande (24) active les moteurs de treuils pour la rotation, si nécessaire, des tambours à une vitesse de rotation destinée à contrebalancer ces mouvements, amortissant ainsi les oscillations de la tour (2) jusqu'à ce qu'une limite prédéterminée d'oscillation soit atteinte.

12. Procédé selon la revendication 9 destiné à l'installation d'une éolienne terrestre **caractérisé en ce que** le procédé comprend les étapes consistant à
disposer le treuil (21) sur la tour (2) ou de préférence sur le sol (34) à une certaine distance de la tour (2),
fournir les moyens de fixation (23) pour ladite sangle (22) sur le sol à une certaine distance de la tour (2) ou de préférence sur la tour (2) ou la nacelle (3),
appliquer une traction contrôlée sur la tour 2) ou la nacelle (3).

13. Procédé selon la revendication 9 ou 12 destiné à l'installation d'une éolienne terrestre **caractérisé en ce que** le procédé comprend les étapes consistant à
fournir un agencement de treuils comprenant deux treuils (21), chacun desdits treuils comprenant un moteur de treuil et un tambour rotatif bidirectionnel muni d'une sangle (22), dans lequel les treuils (21) sont placés sur le sol (34), dans lequel chaque sangle (22) est munie de moyens de fixation (23) pour la fixation à la tour (2) ou à la nacelle (3), dans lequel les sangles (22) sont agencées pour appliquer une traction contrôlée sur la tour ou la nacelle, et dans lequel le système de commande (24) est relié de manière commandable à chaque moteur de treuil pour commander les rotations des tambours,
activer les moteurs de treuils jusqu'à ce que des tensions de sangles prédéterminées soient atteintes dans les deux sangles (22), et
pendant les mouvements/oscillations de la tour (2), le système de commande (24) active les moteurs de treuils pour la rotation, si nécessaire, des tambours à une vitesse de rotation destinée à contrebalancer ces mouvements, amortissant ainsi les oscillations de la tour (2) jusqu'à ce qu'une limite prédéterminée d'oscillation soit atteinte.

14. Procédé selon l'une quelconque des revendications 9 à 13, **caractérisé en ce que** le procédé comprend les étapes consistant à
fournir un ou plusieurs convertisseurs de fréquence pour le système de commande (24),
entraîner le ou les moteurs de treuils à l'aide du ou des convertisseurs de fréquence, et
commander le ou les moteurs de treuils par commande vectorielle, afin de commander le couple du ou des moteurs de treuils directement à partir des convertisseurs de fréquence.

15. Procédé selon l'une quelconque des revendications 9 à 13, **caractérisé en ce que** le procédé comprend les étapes consistant à
fournir une pièce de transition (19),
fixer la pièce de transition (19) à la tour (2), à la nacelle (3) ou à la fondation (16) et
fixer la ou les sangles (22) à la pièce de transition (19).
